Europäisches Patentamt

European Patent Office

Office européen des brevets

(11) Publication number: **0 073 769**

**B1**

(12) **EUROPEAN PATENT SPECIFICATION**

(45) Date of publication of patent specification: **06.11.85**

(21) Application number: **82900356.5**

(22) Date of filing: **03.02.82**

(86) International application number:
**PCT/DK82/00008**

(87) International publication number:
**WO 82/02645 19.08.82 Gazette 82/20**

(51) Int. Cl.⁴: **A 01 K 73/02, A 01 K 79/00**

(54) **METHOD FOR TAKING IN THE CATCH OF A TRAWL BY MEANS OF A FISH PUMP.**

(30) Priority: **04.02.81 DK 482/81**

(43) Date of publication of application:
**16.03.83 Bulletin 83/11**

(45) Publication of the grant of the patent:
**06.11.85 Bulletin 85/45**

(84) Designated Contracting States:
**BE DE FR GB NL SE**

(56) References cited:
**DK-C- 26 331**
**GB-A-1 225 469**
**NO-C- 109 811**
**US-A-1 447 553**

(73) Proprietor: **JACOBSEN, Solbjorn**
**Dr. Dahlsgota 13**
**DK-3800 Torshavn The Faroe Islands (DK)**

(72) Inventor: **JACOBSEN, Solbjorn**
**Dr. Dahlsgota 13**
**DK-3800 Torshavn The Faroe Islands (DK)**

(74) Representative: **Patentanwälte Wenzel & Kalkoff**
**Grubes Allee 26 Postfach 730466**
**D-2000 Hamburg 73 (DE)**

Courier Press, Leamington Spa, England.

## Description

The invention relates to a method for taking in a catch from a trawl (net) comprising a cod end, wherein fish caught in the trawl are pumped therefrom by a pump, through a pumping pipe onto a vessel whilst the cod end remains in the water and also to a trawl for use in connection with the method.

By a known method of this kind the catch is taken in by means of a fishing pump from the vessel, which pump is coupled to the cod end after this has been hauled in on the side of the vessel. The disadvantage of this known method is that in rough weather the cod end often has time to sink before the pump is placed in it. The cod end also often sinks during pumping. The reason for this is that when the cod end is moved in rough sea the air quickly leaves the fish and thus the buoyancy is reduced. Furthermore, the vessel lies side by side with the cod end during the pumping, so that it is difficult to manoeuvre.

From the above can be seen that hauling in the catch is a problem in rough weather, i.e. better weather is needed to haul in the catch than is needed to put out the trawl from the vessel and to fish.

The purpose of the invention is to specify a method and a trawl of the above mentioned species which make it possible to haul in the catch under just as bad weather conditions in which can be fished. Furthermore it is a purpose of the invention to specify a trawl for use in connection with the method.

The method according to the invention is characterised in that the pump is attached to the trawl before the fishing is started and that when the trawl is to be emptied it is partially hauled onto the vessel and the pumping pipe and transmissions (hydraulic pipes, electric cables, pneumatic pipes) on the vessel are connected to couplings arranged at the ends of the pumping pipe and power transmissions provided on the trawl, which couplings are provided some way up towards the mouth of the trawl and preferably at the mouth of the cod end, whereupon the pump is started to pump fish on board the vessel, and when the pumping is finished the transmission means and pumping pipe are disconnected and the trawl is paid out back to its fishing position.

In this method it is of no importance if the cod end sinks because the transmissions from the trawl merely have to be connected to those on the vessel to be able to pump the fish on board. It will always be possible, in the roughest weather in which can be fished, to haul in the trawl and thus connect the transmissions. Furthermore the time it takes to couple the pump to the cod end is also saved, since the pump is placed on or in the cod end before fishing is started. It is a further advantage of the invention that the pump pipe is a pressure pipe, and so does not need to be of special construction. Yet another advantage is that the whole of the pumping system is inactive during the trawling and does not disturb this in any way.

A method is known from Danish Patent No. 26331 in which the end of the cod end is connected to the vessel by a pipe during fishing so that the fish are pumped on to the vessel as they are caught. However, this method is not practicable in deep-sea fishing as known today (i.e. at 200—300 fathoms). The resistance caused by the pipe creates strength problems for the pipe itself and necessitates a higher motor power of the vessel.

A further advantage of the invention is to be seen in the fact that the vessel continues to cruise during the pumping action and that the cruising speed is adapted to the admission of a required rate of water and fish to the pump. By adjusting the speed of the vessel suitably the amount of fish which is pressed aft in the cod end can also be adjusted. Thus, the mixture of fish and water can be adjusted to correspond to the size of the pump which reduces the damage to the fish to a lowest possible minimum.

Furthermore, it is advantageous that the diameter of the cod end can be reduced upstream of and adjacent to the mouth of the pump thus adjusting the admission of fish even further.

In accordance with the invention a trawl for use with the method is characterised in that a fish pump and power transmission means are attached to the cod end and that the pumping pipe and the power transmission means extend some way towards the mouth of the trawl and preferably up to the mouth of the cod end, the pumping pipe and the power transmission means each terminating in a coupling for connection to a corresponding pumping pipe and power transmission means of a vessel.

For easy inspection, repair and change of the pump, this may be detachably attached onto the end portion of the cod end. For the same reasons the pumping pipe and power transmission means may be detachably attached to the trawl.

The pumping pipe and the power transmission means may expediently be of identical lengths corresponding to the length of the cod end so that they can immediately be connected, changed or dismantled.

During the trawling or hauling in of the net, the fish are pressed aft in the cod end. In order to prevent them being packed into the pump and clogging it a throttle valve may be arranged in the vicinity of the suction opening of the fish pump and a motive device for closing the fish pump during trawling and opening it when the fish is to be pumped. The throttle valve can advantageously form an integral part of the fish pump.

In order to avoid the pump weighing down the cod end the pump may be arranged in a housing or provided with an appropriate type of float(s), i.e. buoyancy creating body(ies) providing a sufficient buoyancy for the fish pump.

The invention will now be described in greater detail with reference to the accompanying, schematic drawings showing preferred embodiments of the invention. In the drawings

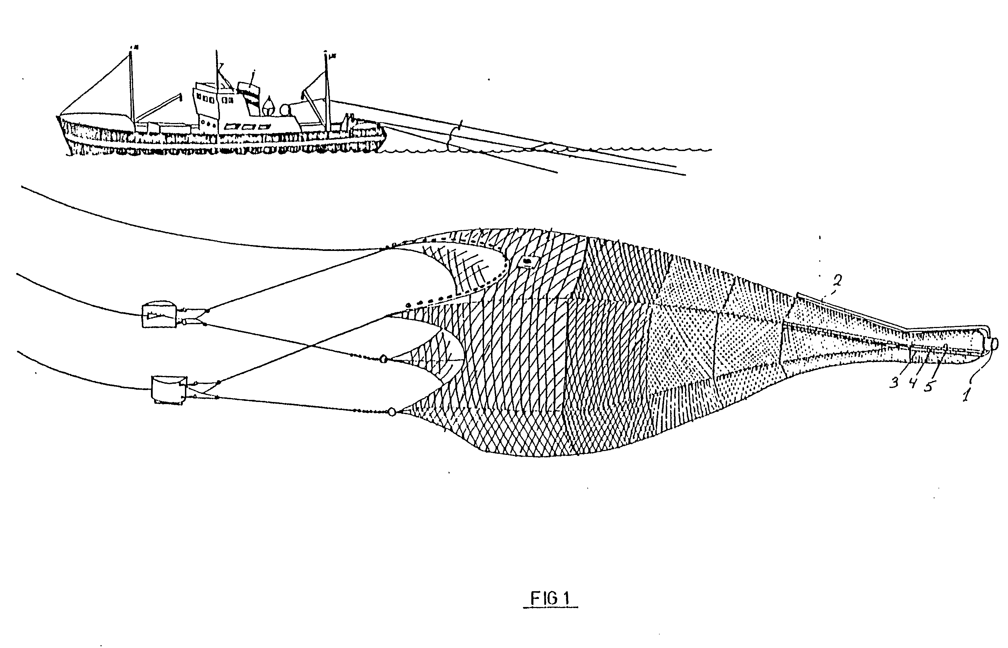

Fig. 1 shows a trawler and a trawl in staggered representation, the trawl being in catch position,

Fig. 2 shows, on a distorted scale, the stern of a stern trawler, the net being shown partially hauled onto the vessel for emptying and being equipped with an especially designed fishing pump,

Fig. 3 shows a cross-section of the pump of Fig. 2 on an enlarged scale,

Fig. 4 shows a longitudinal section through the pump along the line IV—IV of Fig. 3 and

Fig. 5 shows a cross-section of the front end of the pump along the line V—V of Fig. 3.

A fishing pump 1 is equipped with floats creating buoyancy to avoid weighing down of a cod end of a trawl. The fishing pump itself is hydraulically operated, but it is inactive during fishing because then it is not connected to any motive power. A hydraulically operated valve 25 is placed between the fishing pump and the cod end, which valve is closed during fishing to avoid that fish is packed in the pump and clogs it. The position of this valve 25 cannot be changed during fishing. Like the pump, it can only be changed when the trawl has been hauled in and hydraulic pipes are connected to the hydraulic pumping station of the vessel.

A fishing pump pipe 2 is attached to the cod end.

Hydraulic pipes 3, 4 and 5 are connected to the fishing pump 1 and the valve 2, 5, the pipe 3 cooperating with the valve and pipes 4, 5 related to the pump. These pipes 3, 4 and 5 are also fixed to the cod end and are taken up to the mouth of the cod end.

If the trawl is equipped as outlined above it is preferable that the joints of the trawl be strengthened with ropes along its whole longitudinal direction. The pipes 3, 4 and 5 are fixed to such ropes at intervals of approximately 2 m. If materials which weigh down the trawl are used this is compensated by equipping the pipes with the aforementioned buoyancy balls or (floats) at suitable intervals.

The hydraulic pipes are closed at their front ends with valves which can only be opened when the pipes are connected to the vessel. The length of the pipes is determined by the length of the cod end and the distance between it and the vessel during pumping.

During active trawling the whole of the pumping system is inactive and does not disturb the trawling in any way. The whole of the system is placed "leeward" to the whole small-meshed part of the trawl. Floating trawls are normally equipped with filling indicators on the cod end. These indicators are not in any way connected to the pumping system. The filling indicators together with the net probing instrument are connected to the instruments (operating panel) on the bridge (of the vessel) and indicate when the trawl has to be hauled in. The procedure for hauling in is conventional, the trawl normally being taken on a net drum 6. When the fishing pump pipe 2 and the hydraulic pipes 3, 4, 5 come on board the hauling is stopped. The hydraulic pipes are connected to the hydraulic system of the vessel and the fishing pump pipe 2 is connected to a tube which ends in the filter box 7 of the vessel. Thereafter pumping can be commenced by activation of the valve between the pump and the sack (cod end). Pump, sack and part of the front net hang astern of the vessel during the pumping. By adjusting the speed of the vessel suitably the amount of fish pressed aft in the sack and to the pump can be adjusted, and thereby also the mixture of water/fish to be pumped. To ensure that the pump does not become "choked" if the vessel moves too fast a part of the cod end 1—2 fathoms ahead of the pump can be narrowed, thereby reducing the influx of fish. Thereby a fish/water mixture appropriate for the size of the pump can be obtained and accordingly the amount of damage to the fish is also greatly reduced.

An essential characteristic of the above method is that the pumping system is fixed to the trawl during trawling and not to the hydraulic system of the vessel.

When the trawl is hauled in the pumping system is connected to the hydraulic system of the vessel and to the filter box system of the vessel by snap lock. All connection places are positioned suitably near to where the pipes come on board with the trawl. Hereby the operation of placing the pump in the cod end is avoided. Pumping can be started immediately and can continue even if the cod end sinks.

When the cod end has been pumped empty the pipes are disconnected and the trawl put out again without the cod end having been taken on board, thus saving much time.

None of the above mentioned operations are critical under difficult weather conditions and the method will essentially improve the efficiency of combined trawl/seine boats, side and stern trawlers and also part-trawlers, the method can also be used when the catch is to be transferred from one vessel to another, i.e. when the cod end is disengaged from a trawl pulled by one vessel and is then picked up by a second vessel.

The method is described in connection with floating trawls, but can also be used with other types of net such as pound trawls and circle seines.

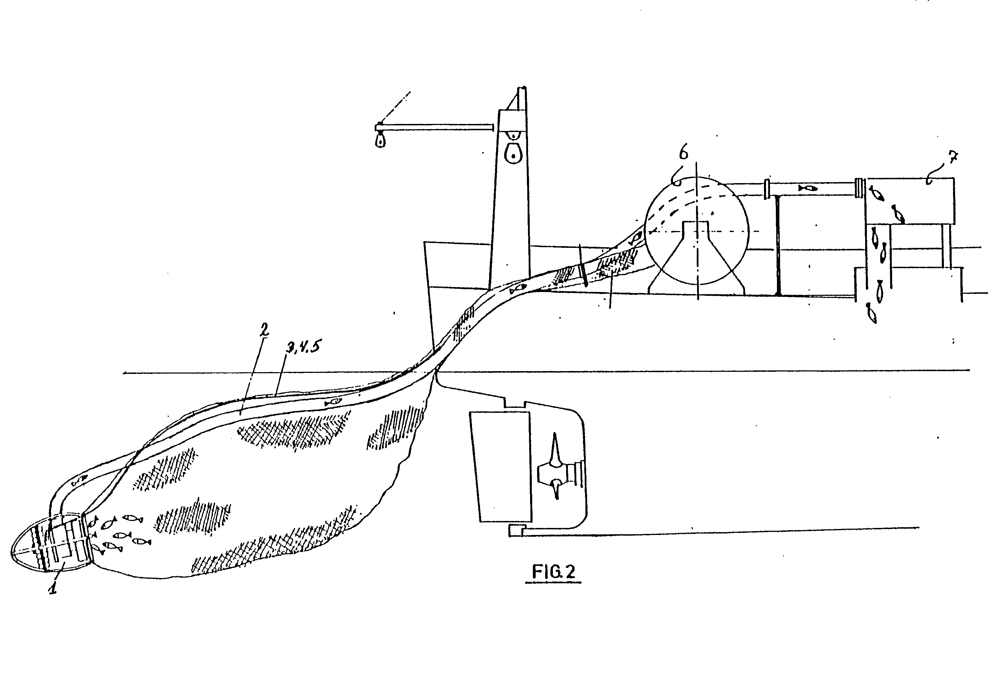

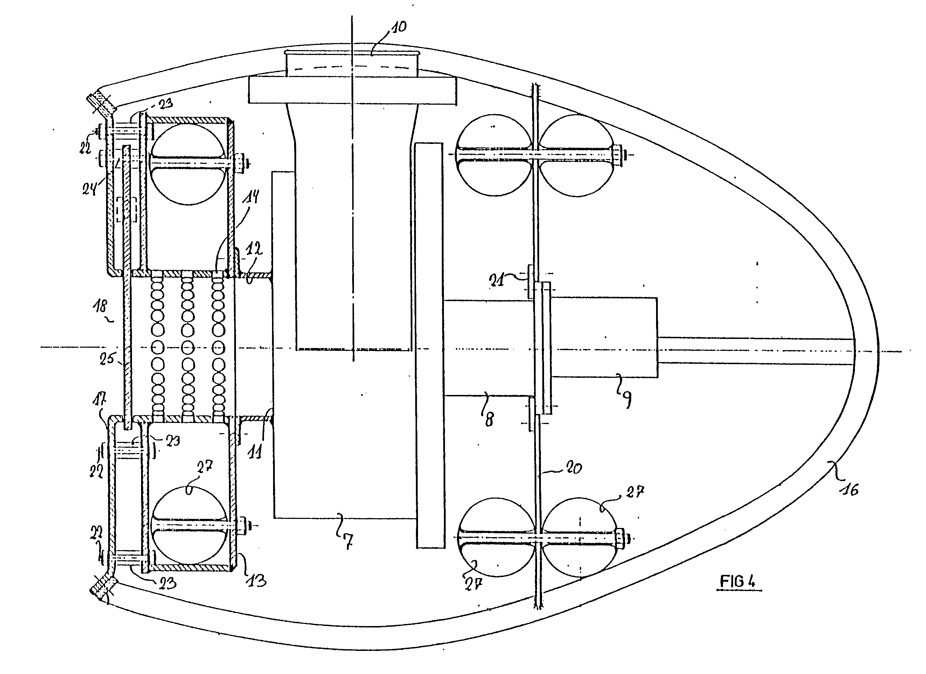

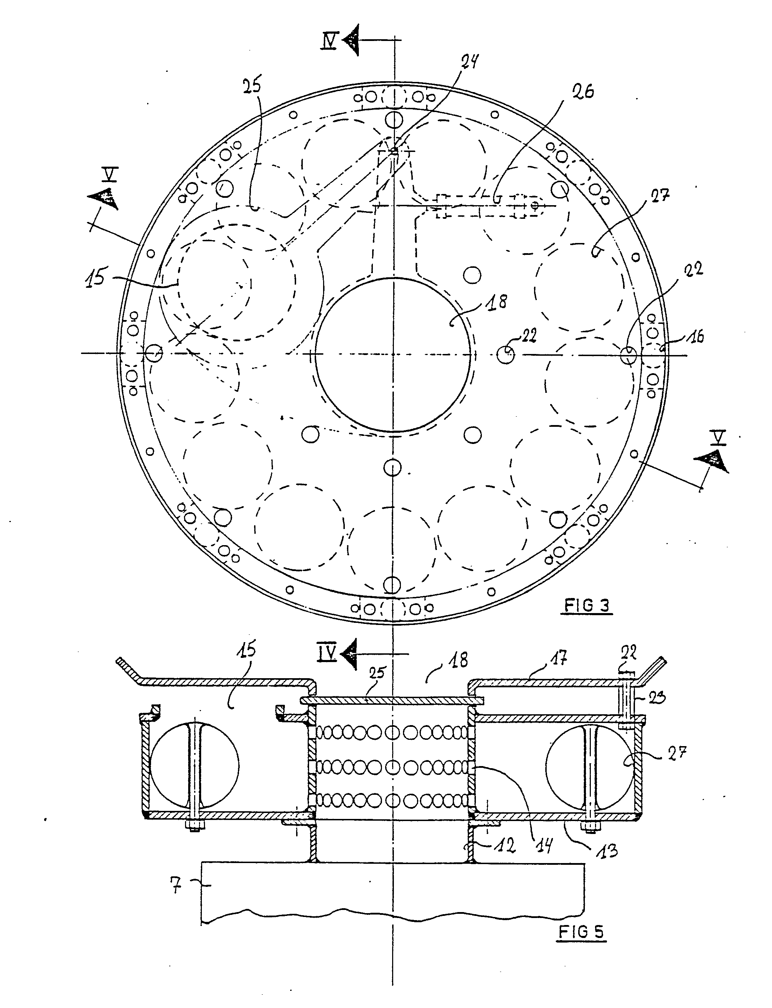

With respect to the type of pump to be used it should be noted that pumps of widely varying construction can be used. However, Figs. 2 to 5 only show one type of embodiment of a pump to be used with the method according to the invention.

Referring to Fig. 4 of the drawings the pumping set comprises a centrifugal pump 7 of the type generally used as a fishing pump. The centrifugal pump 7 is driven via a gear 8 by a hydraulic motor 9. The pump pipe 2 is connected to an outlet opening 10 of the centrifugal pump 7.

The inlet opening 11 of the centrifugal pump 7 is extended with a tube-piece 12 around which is placed a ring-shaped box 13, the tube-piece being connected to the box via an array of holes 14. The box has an inlet opening 15 on its side for sea water (see Fig. 5). The function of this is the following:

The centrifugal pump, fitted with accessories, is fixed to a frame consisting of a number of tubular buckles 16 bolted to a circular plate 17, the tubular buckles being provided with a foot consisting of a piece of flat iron. In the middle of the circular plate 17 there is a recess 18 connected to the inlet opening of the centrifugal pump 7. Hindmost in the frame there is another circular plate 20 to which the buckles are fastened. The centrifugal pump with accessories is fastened to the frame so that the gear and the hydraulic motor are bolted to the hindmost plate via a flange ring 21, the motor sticking out through a hole in the plate 20.

The centrifugal pump is fastened at the front end of the frame so that the ring shaped box is bolted to the frame plate 17 with bolts 22. The ring-shaped box 13 is kept at a distance from the plate 17 by means of distance tubes 23. In the space thus created a pivoting throttle valve 25 is placed around an axle 24, which valve can be activated to close and open the inlet opening of the pump by means of a hydraulic cylinder. Usually the hydraulic cylinder is controlled by a separate hydraulic pipe, but it is also possible to have it driven by the difference pressure, via the hydraulic motor. The throttle valve 25 can be an integrated part of the centrifugal pump.

To ensure that the pump does not weigh down the end of the cod end the frame is further provided with a number of buoyancy-giving balls (floats) 27 of the same type as those used to keep the trawl mouth distended. The floats are partly placed in a ring inside the ring-shaped box 13 and partly on the plate 20. They are bolted in pairs on both sides of the plate 20.

It should be mentioned that the frame protects the pump if this is dragged along the sea bed during trawling or hits the side of the vessel when it is being hauled in.

The function of the pump is as follows:

When the (trawl) net has been hauled in and the various pipes connected as shown in Fig. 2 the hydraulic motor of the centrifugal pump is started, the throttle valve being in its closed position. The centrifugal pump then starts sucking in clean sea water, taking the water in via the opening 15 in the ring-shaped box 13 and via the holes 14 in the tube piece 12. The throttle valve first opens when the pump has started to work and fish pour to the pump. At the same time the throttle valve pivots over and closes the intake 15 of the ring-shaped box 13.

## Claims

1. A method for taking in a catch from a trawl (net) comprising a cod end, wherein fish caught in the trawl are pumped therefrom by a pump (1), through a pumping pipe (2) onto a vessel whilst the cod end remains in the water, characterised in that the pump is attached to the trawl before the fishing is started and that when the trawl is to be emptied it is partially hauled onto the vessel and the pumping pipe and transmissions (hydraulic pipes, electric cables, pneumatic pipes) on the vessel are connected to couplings arranged at the ends of the pumping pipe and power transmission means (3, 4, 5) provided on the trawl, which couplings are provided some way towards the mouth of the trawl and preferably at the mouth of the cod end, whereupon the pump is started to pump fish on board the vessel, and when the pumping is finished the transmission means and pumping pipe are disconnected and the trawl is paid out back to its fishing position.

2. A method according to claim 1, characterised in that the vessel continues to cruise during the pumping action and that the cruising speed is adapted to the admission of a required rate of water and fish to the pump (1).

3. A method according to claim 2, characterised in that the diameter of the cod end is reduced upstream of and adjacent to the mouth of the pump (1).

4. Trawl for use in the method according to claim 1 comprising a cod end and a pumping pipe (2) attached thereto, characterised in that a fish pump (1) and power transmission means (3, 4, 5) are attached to the cod end and that the pumping pipe (2) and the power transmission means extend some way towards the mouth of the trawl and preferably up to the mouth of the cod end, the pumping pipe and the power transmission means each terminating in a coupling for connection to a corresponding pumping pipe and power transmission means of a vessel.

5. Trawl according to claim 4, characterised in that the fish pump (1) is detachably attached onto the end portion of the cod end.

6. Trawl according to claim 4, characterised in that the pumping pipe (2) and power transmission means (3, 4, 5) are detachably attached to the trawl.

7. Trawl according to claim 4, characterised in that the pumping pipe (2) and the power transmission means (3, 4, 5) are of identical lengths.

8. Trawl according to claim 4, characterised in that there is arranged a throttle valve (25) in the vicinity of the suction opening of the fish pump (1) and a motive device (26) for closing the fish pump during trawling and opening it when the fish is to be pumped.

9. Trawl according to claim 8, characterised in that the throttle valve (25) forms an integral part of the fish pump (1).

10. Trawl according to claim 8 or 9, characterised in that the fish pump (1) is arranged in a housing or provided with an appropriate type of float(s) (27) providing a sufficient buoyancy for the fish pump.

## Revendications

1. Une méthode pour rentrer la prise depuis un chalut à poche, les poissons pris dans le chalut étant pompés par une pompe (1) à travers un tuyau de pompe jusqu'à un navire pendant que la poche reste dans l'eau, caractérisée en ce que la pompe est attachée au chalut avant de commencer la pêche et en ce que — au moment où le chalut doit être vidé — il est halé partiellement sur le navire et le tuyau de pompe et les transmissions (tuyaux hydrauliques, câbles électriques et tuyaux pneumatiques) sur le navire sont branchés sur les raccords montés aux extremités du tuyau de pompe et des transmissions d'énergie (3, 4 et 5) montées sur le chalut, ces raccords étant prévus vers l'orifice du chalut et de préférence à l'orifice de la poche, après quoi la pompe est mise en marche pour pomper le poisson à bord du navire, et le pompage terminé, les transmissions et le tuyau de pompe sont débranchés, et on laisse retourner en filant le chalut à sa position de pêche.

2. Méthode selon la revendication 1, caractérisée en ce que le navire continue à croiser pendant l'action de pompage et en ce que la vitesse de croisière est adaptée à l'entrée à la pompe (1) d'une quantité voulue d'eau et de poisson.

3. Méthode selon la revendication 2, caractérisée en ce que le diamètre de la poche est réduit à contre-courant du et adjacent à l'orifice de la pompe (1).

4. Chalut pour emploi dans la méthode selon la revendication 1, comprenant une poche et un tuyau de pompe (2) y attaché, caractérisé en ce qu'une pompe à poisson (1) et des transmissions d'énergie (3, 4, et 5) sont branchées sur la poche et que le tuyau de pompe (2) et les transmissions d'énergie s'étendent vers l'orifice du chalut et de préférence jusqu'à l'orifice de la poche, le tuyau de pompe et les transmissions d'énergie terminant chacun par un raccord pour branchement sur un tuyau de pompe et sur les transmissions d'énergie y correspondant d'un navire.

5. Chalut selon la revendication 4, caractérisé en ce que la pompe à poisson est attachée de manière détachable à l'extrémité de la poche.

6. Chalut selon la revendication 4, caractérisé en ce que le tuyau de pompe (2) et les transmissions d'énergie (3, 4 et 5) sont attachés de manière détachable au chalut.

7. Chalut selon la revendication 4, caractérisé en ce que le tuyau de pompe (2) et les transmissions d'énergie (3, 4 et 5) sont de longueurs identiques.

8. Chalut selon la revendication 4, caractérisé en ce qu'une soupage de réglage (25) est montée près de l'orifice d'aspiration de la pompe à poisson (1), et en ce qu'un mécanisme moteur (26) est monté qui ferme la pompe à poisson pendant le chalutage et qui ouvre la pompe quand le poisson doit être pompé.

9. Chalut selon la revendication 8, caractérisé en ce que la soupage de réglage (25) fait partie intégrante de la pompe à poisson (1).

10. Chalut selon la revendication 8 ou 9, caractérisé en ce que la pompe à poisson (1) est montée dans un boîtier ou munie d'un type adéquat de flotteur(s) (27) donnant à la pompe à poisson une flottabilité suffisante.

**Patentansprüche**

1. Verfahren zum Einholen eines Fanges aus einem Schleppnetz, mit einem Steert, wobei in dem Schleppnetz gefangene Fische aus diesem mittels einer Pumpe (1) durch eine Pumpleitung (2) auf ein Schiff gepumpt werden, während der Steert im Wasser verbleibt, dadurch gekennzeichnet, daß die Pumpe vor Beginn des Fischens an dem Schleppnetz befestigt wird und daß das Schleppnetz zum Entleeren teiweise an Bord des Schiffes eingeholt wird und die Pumpleitung und Übertragungsmittel (hydraulische Leitungen, elektrische Kabel, pneumatische Leitungen) an Bord mit Kupplungen verbunden werden, die an den Enden der an dem Schleppnetz vorgesehenen Pumpleitung und Energieübertragungsmittel (3, 4, 5) angeordnet sind, wobei diese Kupplungen etwas in Richtung auf die Öffnung des Schleppnetzes zu und vorzugsweise an der Öffnung des Steerts vorgesehen sind, woraufhin die Pumpe zum Pumpen des Fisches an Bord des Schiffes in Gang gesetzt wird, und bei Beendigung des Pumpens die Übertragungsmittel und die Pumpleitung gelöst und das Schleppnetz wieder in seine Fanglage zurückgebracht wird.

2. Verfahren nach Anspruch 1, dadurch gekennzeichnet, daß das Schiff während des Pumpvorgangs seine Fahrt fortsetzt und daß die Fahrtgeschwindigkeit dem Eintritt einer benötigten Wasser- und Fischmenge in die Pumpe (1) angepaßt wird.

3. Verfahren nach Anspruch 2, dadurch gekennzeichnet, daß der Durchmesser des Steerts oberhalb und in der Nähe der Öffnung der Pumpe (1) verjüngt wird.

4. Schleppnetz zur verwendung bei dem Verfahren nach Anspruch 1, mit einem Steert und einer daran befestigten Pumpleitung (2), dadurch gekennzeichnet, daß eine Fischpumpe (1) und Energieübertragungsmittel (3, 4, 5) an dem Steert befestigt sind und daß die Pumpleitung (2) und die Energieübertragungsmittel sich etwas in Richtung auf die Öffnung des Schleppnetzes und vorzugsweise bis zur Öffnung des Steerts erstrekken, wobei die Pumpleitung und die Energieübertragungsmittel jeweils in einer Kupplung zur Verbindung mit einer entsprechenden Pumpleitung und Energieübertragungsmitteln eines Schiffes enden.

5. Schleppnetz nach Anspruch 4, dadurch gekennzeichnet, daß die Fischpumpe lösbar am Endabschnitt des Steerts befestigt ist.

6. Schleppnetz nach Anspruch 4, dadurch gekennzeichnet, daß die Pumpleitung und die Energieübertragungsmittel lösbar mit dem Schleppnetz befestigt sind.

7. Schleppnetz nach Anspruch 4, dadurch gekennzeichnet, daß die Pumpleitung (2) und die Energieübertragungsmittel (3, 4, 5) gleiche Längen aufweisen.

8. Schleppnetz nach Anspruch 4, dadurch gekennzeichnet, daß ein Drosselventil (25) in der Nähe der Suagöffnung der Fischpumpe (1) und eine Antriebsvorrichtung (26) zum Schließen der Fischpumpe während des Fischens und zu ihrem Öffnen beim Abpumpen des Fisches vorgesehen sind.

9. Schleppnetz nach Anspruch 8, dadurch gekennzeichnet, daß das Drosselventil (25) einen integralen Bestandteil der Fischpumpe (1) bildet.

10. Schleppnetz nach Anspruch 8 oder 9, dadurch gekennzeichnet, daß die Fischpumpe (1) in einem Gehäuse angeordnet oder mit einer geeigneten Art von Schwimmer(n) (27) versehen ist, um für einen genügenden Auftrieb der Fischpumpe zu sorgen.

FIG 1

0 073 769

FIG. 2

0 073 769

FIG 4

0 073 769

FIG 3

FIG 5